(19) Europäisches Patentamt
European Patent Office
Office européen des brevets

(11) **EP 1 803 757 A1**

(12) **EUROPEAN PATENT APPLICATION**
published in accordance with Art. 158(3) EPC

(43) Date of publication:
**04.07.2007 Bulletin 2007/27**

(21) Application number: 05795830.8

(22) Date of filing: **18.10.2005**

(51) Int Cl.:
***C08G 18/48*** *(2006.01)*    ***C08G 18/66*** *(2006.01)*

(86) International application number:
**PCT/JP2005/019146**

(87) International publication number:
**WO 2006/043569 (27.04.2006 Gazette 2006/17)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **21.10.2004 JP 2004306840**
**21.07.2005 JP 2005211499**

(71) Applicant: **Asahi Glass Company, Limited**
**Chiyoda-ku, Tokyo 100-8405 (JP)**

(72) Inventors:
• **TSUGE, Yukio**
**Kamisu-city, Ibaraki 314-0195 (JP)**
• **OHORI, Tomeyoshi**
**Kamisu-city, Ibaraki 314-0195 (JP)**
• **WADA, Hiroshi**
**Kamisu-city, Ibaraki 314-0195 (JP)**

(74) Representative: **Blodig, Wolfgang**
**Wächtershäuser & Hartz**
**Patentanwälte**
**Weinstrasse 8**
**80333 München (DE)**

(54) **POLYURETHANE RESIN AND PROCESS FOR PRODUCING POLYURETHANE RESIN SOLUTION**

(57)    Provided is a method for producing a polyurethane resin solution having a low tensile elasticity and a low elastic modulus and excellent elastic recovery under low temperatures.

A method for producing a polyurethane resin solution, which comprises reacting an isocyanate-terminated prepolymer with a chain extender and/or a curing agent in an organic solvent, wherein said prepolymer is obtained by reacting a polyisocyanate compound and a polyether polyol (A) having a number average molecular weight of from 750 to 4,000, which is obtained by addition of an alkylene oxide with a polyoxytetramethylene diol or a polycarbonate diol having a number average molecular weight of from 500 to 2,500 as an initiator, using a composite metal cyanide complex catalyst.

EP 1 803 757 A1

**Description**

TECHNICAL FIELD

The present invention relates to a polyurethane resin and a method for producing its solution.

BACKGROUND ART

A polyurethane resin produced by using a polyoxy tetramethylene diol (hereinafter referred to also as "PTMG") as a polymer of tetrahydrofuran (hereinafter referred to also as "THF") is used for e.g. an elastic fiber, a synthetic leather, a flooring material or a printing ink binder since it is excellent in e.g. the elongation property or hydrolysis resistance.

However, PTMG with a molecular weight ranging from 500 to 3,000, which is useful for the polyurethane resin, has a melting point in a range of from 20 to 40°C. A polyurethane resin using such PTMG as a starting material has a problem that PTMG-derived portions crystallize at temperatures below the normal temperature to increase the elastic modulus (modulus) and degrade elastic recovery.

In order to overcome the drawbacks of PTMG, it is proposed to use a copolymer of THF and 3-methyltetrahydrofuran (hereinafter referred to also as "3Me-THF") or a random copolymer of THF and ethylene oxide (hereinafter referred to also as "EO") and/or propylene oxide (hereinafter referred to also as "PO"). However, with respect to the THF/3Me-THF copolymer, the polyol becomes expensive since the starting material 3Me-THF is expensive, and its elastic recovery at a low temperature is insufficient. Furthermore, with respect to the THF/EO random copolymer or THF/PO random copolymer, a molecular weight distribution of the polyol is likely to be wide, and a urethane resin using such a random copolymer as a starting material was insufficient in the elongation property and tensile strength.

Further, a polyether polyol is also proposed, which is obtained by ring-opening polymerization of PO with PTMG as an initiator, using a basic catalyst such as KOH. However, the molecular weight distribution thereof is broad, and a polyurethane resin prepared by using it as a starting material was insufficient in the elongation property and tensile strength.

Patent Document 1: JP-A-63-235320

Patent Document 2: JP-A-2-19511

Patent Document 3: JP-A-2002-34827

Patent Document 4: JP-A-2002-34828

Patent Document 5: JP-A-8-511297

DISCLOSURE OF THE INVENTION

PROBLEMS THAT THE INVENTION IS TO SOLVE

The present invention was made in order to overcome the above problems in the prior art and provides a method for producing a polyurethane resin which has a large elongation at break, a low elastic modulus in tension, and a low elastic modulus and excellent elastic recovery even under low temperatures; and a method for producing its solution.

MEANS OF SOLVING THE PROBLEMS

The present inventors have found that by addition polymerization of an alkylene oxide with PTMG, it is possible to lower the problematic elastic modulus in tension and substantially improve the elastic recovery under low temperatures, without impairing the elongation property of a polyurethane resin using PTMG as a starting material. Namely, they have found that when a polyol obtained by polymerizing an alkylene oxide with PTMG by means of a composite metal cyanide complex (hereinafter also referred to as "DMC") catalyst, is used, it is possible to obtain a polyurethane resin excellent in elongation property, and have arrived at the present invention. The present invention provides the following:

(1) A method for producing a polyurethane resin, which comprises reacting a polyol compound and a polyisocyanate compound, characterized by using, as all or part of the above polyol compound, a polyether polyol (A) having a molecular weight of from 750 to 4,000, which is obtained by a ring-opening addition polymerization of an alkylene oxide with a polyoxytetramethylene polyol or a polycarbonate polyol having a molecular weight of from 500 to 2,500 as an initiator, using a composite metal cyanide complex catalyst.

(2) A method for producing a polyurethane resin, which comprises reacting a polyol compound, a polyisocyanate compound, and a chain extender and/or a curing agent, characterized by using, as all or part of the above polyol compound, a polyether polyol (A) having a molecular weight of from 750 to 4,000, which is obtained by a ring-opening addition polymerization of an alkylene oxide with a polyoxytetramethylene polyol or a polycarbonate polyol having a molecular weight of from 500 to 2,500 as an initiator, using a composite metal cyanide complex catalyst.

(3) A method for producing a polyurethane resin, which comprises reacting an isocyanate-terminated prepolymer obtained by reacting a polyol compound and a polyisocyanate compound, with a chain extender and/or a curing agent, characterized by using, as all or part of the above polyol compound, a polyether polyol (A) having a molecular weight of from 750 to 4,000, which is obtained by a ring-opening addition polymerization of an alkylene oxide with a polyoxytetramethylene polyol or a polycarbonate polyol having a molecular weight of from 500 to 2,500 as an initiator, using a composite metal cyanide complex catalyst.

(4) A method for producing a polyurethane resin solution, which comprises reacting an isocyanate-terminated prepolymer with a chain extender and/or a curing agent in an organic solvent, wherein said prepolymer is obtained by reacting a polyisocyanate compound and a polyether polyol (A) having a molecular weight of from 750 to 4,000, which is obtained by a ring-opening addition polymerization of an alkylene oxide with a polyoxytetramethylene polyol or a polycarbonate polyol having a molecular weight of from 500 to 2,500 as an initiator, using a composite metal cyanide complex catalyst.

(5) A polyurethane resin solution in which a polyurethane resin is dissolved in an organic solvent, wherein the polyurethane resin is obtained by reacting an isocyanate-terminated prepolymer with a chain extender and/or a curing agent in an organic solvent wherein said prepolymer is obtained by reacting a polyisocyanate compound and a polyether polyol (A) having a molecular weight of from 750 to 4,000, which is obtained by a ring-opening addition polymerization of an alkylene oxide with a polyoxytetramethylene polyol or a polycarbonate polyol having a molecular weight of from 500 to 2,500 as an initiator, using a composite metal cyanide complex catalyst.

(6) The polyurethane resin solution according to the above (5), which is used for an elastic film, an elastic fiber or a synthetic leather.

(7) A method for producing a polyurethane resin, which comprises molding the polyurethane resin solution as defined in the above (5), into a predetermined shape, and thereafter removing the organic solvent.

(8) A method for producing a polyurethane resin, which comprises coating or impregnating a substrate with the polyurethane resin solution as defined in the above (5), and thereafter removing the organic solvent.

EFFECTS OF THE INVENTION

According the present invention, it is possible to obtain a polyurethane resin excellent in the elongation property by using a polyol obtainable by polymerization of an alkylene oxide with PTMG, using a DMC catalyst. In further detail, the present invention provides a method for producing a polyurethane resin which has a large elongation at break, a low elastic modulus in tension and excellent elastic recovery under low temperatures; and a method for producing its solution.

BEST MODE FOR CARRYING OUT THE INVENTION

In the present invention, the values of the weight average molecular weight (Mw)/the number average molecular weight (Mn) of the initiator and a polyether diol were obtained by gel permeation chromatography (GPC). Specifically, gel permeation chromatography (GPC) of several monodispersed polymers which are different in polymerization degree and commercially available as standard samples for molecular weight determination, is carried out by using a commercially available GPC measuring apparatus, to make an analytical curve from the relation between the molecular weight of polystyrene and the retention time. By the use of the above analytical curve, GPC spectra of such sample compounds were subjected to a computer analysis to determine the values of Mw/Mn of such compounds. Such measurement is known. Further, the molecular weight of a polyol is meant for a molecular weight calculated by hydroxyl value thereof (hereinafter, a molecular weight as calculated by hydroxyl value is referred to also as "$M_{OH}$").

Now, details of the present invention are described hereinafter.

(Polyether polyol (A))

(Initiator)

In the present invention, a polyoxytetramethylene polyol or a polycarbonate polyol having a molecular weight of from 500 to 2,500 is used. The polyoxytetramethylene polyol is preferably one having a molecular weight of from 500 to 2,000. If the molecular weight is less than 500, the elongation property of the polyurethane resin obtainable tends to be insufficient. If the molecular weight exceeds 2,500, the polyurethane resin tends to be insufficient in the elastic recovery at a low temperature due to an influence of crystallinity of the initiator portion.

The polyoxytetramethylene polyol is preferably polyoxytetramethylene diol (PTMG), and may, for example, be a polyoxytetramethylene polyol obtainable by ring-opening polymerization of THF by employing a catalyst selected from the group consisting of zeolite, metalloaminosilicate, a super strong acid such as fluorosulfonic acid, a mixture of an acid and acetic anhydride, a perfluorosulfonic acid resin, bleaching clay, or a heteropoly acid having an amount of water of crystallization controlled to a specific range. It is also possible to use, as the initiator of the present invention, a copolymerized polyoxytetramethylene polyol obtained by random copolymerization of THF with at least one compound selected from the group consisting of $C_{2-10}$ alkane diols, alkylene oxides, oxetanes, cyclic acetals and 2-methyltetrahydrofuran. A commercially available PTMG may be used for the present invention.

The polycarbonate polyol has a molecular weight of from 500 to 2,500, preferably from 500 to 2,000, more preferably from 500 to 1,500. If the molecular weight is less than 500, the polyurethane resin obtainable tends to be insufficient in the elongation property. If the molecular weight exceeds 2,500, the polyurethane resin tends to be insufficient in the elastic recovery at low temperatures due to crystallinity of the initiator portion. The polycarbonate polyol is preferably polycarbonate diol, and may be one obtainable by trans esterification of a diol compound with a chloroformate, a dialkyl carbonate, diallyl carbonate or an alkylene carbonate, or by a reaction of a diol compound with phosgene. The above diol compound may, for example, be ethylene glycol, 1,2-propanediol, 1,3-propanediol, 2-methyl-1,3-butanediol, 1,4-butanediol, neopentyl glycol, 1,5-pentanediol, 2-methylpentanediol, 3-methylpentanediol, 2,2,4-trimethyl-1,6-hexanediol, 3,3,5-trimethyl-1,6-hexanediol, 2,3,5-trimethylpentanediol, 1,6-hexanediol, 1,9-nonanediol or 2-methyl-1,8-octanediol. The particularly preferred diol compound to be used in the present invention is 1,6-hexanediol, 1,3-butanediol, 1,4-butandiol and neopentyl glycol. Further, one having a small amount of a compound having at least 3 hydroxyl groups per molecule, such as trimethylolethane, trimethylolpropane, hexanetriol or pentaerythritol, added to the above diol compound, may be mentioned. The above alkylene carbonate may be ethylene carbonate or propylene carbonate. The above dialkyl carbonate may be dimethyl carbonate or diethyl carbonate. The above diallyl carbonate may be diphenyl carbonate.

The initiator to be used in the present invention is preferably polyoxytetramethylene diol. Further, the number of hydroxyl groups in the polyether polyol (A) obtainable is equal to the number of hydroxyl groups per molecule of the initiator to be used. Namely, the polyether polyol (A) is preferably a polyether diol.

When an alkylene oxide is subjected to a ring-opening addition polymerization with the initiator in the present invention, a DMC catalyst is used. When a general-purpose alkali catalyst such as potassium hydroxide is used, the molecular weight distribution of a polyether polyol obtainable tends to be broad, whereby such a catalyst is undesirable for an application to e.g. a urethane elastic fiber where the elongation property is considered to be important.

(DMC catalyst)

The DMC catalyst to be used in the present invention is represented typically by the following formula (1).

$$M^1{}_a[M^2{}_b(CN)_c]_d e(M^1{}_f X_g)h\,(H_2O)i\,(R) \qquad (1)$$

(wherein each of $M^1$ and $M^2$ is a metal atom, X is a halogen atom, R is an organic ligand, and each of a, b, c, d, e, f, g, h and i, is a number which is variable depending upon the atomic balance of metal atoms, the number of organic ligands to be coordinated, etc.)

In the above formula (1), $M^1$ is preferably a metal selected from Zn(II), Fe(II), Fe(III), Co(II), Ni(II), Mo(IV), Mo(VI), Al(III), V(V), Sr(II), W(IV), W(VI), Mn(II), Cr(III), Cu(II), Sn(II) and Pb(II), particularly preferably Zn(II) or Fe(II). Here, Roman numerals in the brackets after the atomic symbols of metals, represent the atomic valences, and the same applies hereinafter.

In the above formula (1), $M^2$ is preferably a metal selected from Fe (II) , Fe (III) , Co (II) , Co (III) , Cr(II), Cr(III), Mn(II), Mn(III), Ni(II), V(IV) and V(V), particularly preferably Co(III) or Fe(III). The DMC catalyst in the present invention is preferably one having a skeleton of zinc hexacyano cobaltate complex.

Further, in the above formula (1), R is an organic ligand. As such an organic ligand, a water-soluble one is preferred. Specifically, one or more compounds selected from tert-butyl alcohol, n-butyl alcohol, isobutyl alcohol, tert-pentyl alcohol, iso-pentyl alcohol, N,N-dimethyl acetamide, ethylene glycol dimethyl ether (also referred to as glyme), diethylene glycol dimethyl ether (also referred to as diglyme), triethylene glycol dimethyl ether (also referred to as triglyme), ethylene glycol mono-tert-butyl ether, iso-propyl alcohol and dioxane, may be mentioned. The dioxane may be 1,4-dioxane or 1,3-dioxane, and is preferably 1,4-dioxane.

In the present invention, a particularly preferred organic ligand is one or more compounds selected from glyme, diglyme, tert-butyl alcohol, tert-pentyl alcohol and ethylene glycol mono-tert-butyl ether (ETB), and tert-butyl alcohol (TBA) or a mixture of tert-butyl alcohol with ethylene glycol mono-tert-butyl ether, is most preferred since high polymerization catalytic activity is obtained.

The composite metal cyanide complex catalyst having the organic ligand in the present invention can be produced by a known production method.

An alkyl oxide to be used in the method of the present invention may, for example, be ethylene oxide, propylene oxide, 1,2-butylene oxide, 2,3-butylene oxide, epichlorohydrine, oxetane, styrene oxide or tetrahydrofuran, and one or more alkylene oxides selected from them may be used. Further, it is possible to carry out a polymerization by using a small amount of epichlorohydrine, oxetane, tetrahydrofuran or a cyclic ester such as lactone. In the present invention, ethylene oxide, propylene oxide or a combination of both of them, is preferably used, and propylene oxide is most preferably used.

(Polymerization method of alkylene oxide)

In the present invention, an alkylene oxide is subjected to ring-opening addition polymerization with an initiator in the presence of a DMC catalyst in a reaction vessel, to produce a polyether polyol. It is possible to carry out the ring-opening addition polymerization by adding one or more of the above alkylene oxides to the reaction vessel in the presence of the initiator and the DMC catalyst. In the present invention, one alkylene oxide may be homopolymerized with an initiator, or two or more alkylene oxides may be subjected to block copolymerization and/or random copolymerization. The ring-opening addition polymerization may be carried out by a known method.

The amount of the DMC catalyst to be used in the ring-opening addition polymerization is not restricted so long as it is an amount required for the ring-opening addition polymerization of the alkylene oxide, but is preferably an amount as small as possible. As the amount of the DMC catalyst to be used in the ring-opening addition polymerization becomes small, it is possible to reduce the amount of the DMC catalyst remaining in a polyether as a product. Thus, it is possible to lower the influence of the DMC catalyst on the reactivity of the polyether obtainable by the ring-opening addition polymerization with polyisocyanate or on the physical properties of a polyurethane product to be produced by using such a polyether as a starting material. Usually, after the ring-opening addition polymerization of the alkylene oxide with the initiator, the DMC catalyst is removed from the polyether obtained. However, in a case where the amount of the DMC catalyst remaining in the polyether becomes small as mentioned above and no adverse effects are produced subsequently, a subsequent step of using the polyether may be carried out without a step of removing the DMC catalyst, whereby it is possible to increase the production efficiency for the polyether. It is preferred to carry out the polymerization of an alkylene oxide with the initiator by using the DMC catalyst in such an amount that the catalyst component (a component excluding e.g. the polyol compound and an excess ligand) of the DMC catalyst would be in an amount of from 10 to 80 ppm in a polymer immediately after the polymerization.

The ring-opening addition polymerization temperature of the alkylene oxide in the present invention is preferably from 30 to 180°C, more preferably from 70 to 160°C, particularly preferably from 90 to 140°C. If the polymerization temperature is lower than 30°C, there may be a case where no ring-opening addition polymerization of the alkylene oxide starts, and if it exceeds 180°C, there may be a case where the polymerization activity of the DMC catalyst decreases.

The polymerization of the alkylene oxide of the present invention may be carried out also by using an organic solvent. The preferred organic solvent may, for example, be an aliphatic hydrocarbon such as hexane, heptane or cyclohexane; an aromatic hydrocarbon such as benzene, toluene or xylene; and a halogenated hydrocarbon such as chloroform or dichloromethane. Further, the amount of the organic solvent to be used is not particularly limited, and it is possible to use an organic solvent in a desired amount.

(Properties of polyether polyol (A))

In the present invention, the polyether polyol (A) is preferably a polyether diol. Further, the molecular weight of the polyether polyol (A), namely, the molecular weight as calculated by hydroxyl value ($M_{OH}$) is from 750 to 4,000, preferably from 1,500 to 2,500.

When the molecular weight is 750 or higher, the polyurethane resin does not tend to be too hard, whereby it is possible to achieve the high elongation at break and low elastic modulus as characteristics in the method of the present invention. When the molecular weight is 4,000 or lower, the viscosity of the polyol does not tend to be too high, whereby the synthesis to obtain the polyurethane is not impaired. Further, the physical properties such as tensile strength are also good. Further, the proportion of the structure derived from the initiator in the polyether polyol (A) is preferably from 20 to 80 mass%, particularly preferably from 30 to 80 mass%. If it is less than 20 mass%, the heat resistance of the polyurethane resin is thereby deteriorated. Further, if it exceeds 80 mass%, the elastic recovery at a low temperature is thereby deteriorated.

The terminal-ethylenic unsaturation degree of the polyether polyol (A) in the present invention is preferably less than 0.01 meq/g. When the terminal ethylenic unsaturation degree is less than 0.01 meq/g, an amount of a monool in the polyether polyol (A) does not tend to be too large, whereby it is possible to obtain a good tensile property and high elongation at break. Further, the molecular weight distribution Mw/Mn of the polyether polyol (A) is preferably at most 1.5, particularly preferably at most 1.2. By employing one having a narrow molecular weight distribution, it is possible to obtain sufficient elastic recovery.

(Method for producing polyurethane resin)

The present invention resides in a method for producing a polyurethane resin, which comprises reacting a polyol compound, a polyisocyanate compound, and a chain extender and/or a curing agent as the case requires, characterized by using, as all or part of the above polyol compound, the above polyether polyol (A).

The method for producing a polyurethane resin may be a one-shot method or a prepolymer method, but is preferably a prepolymer method. Namely, such a method is preferably a method for producing a polyurethane resin, which comprises reacting an isocyanate-terminated prepolymer obtained by reacting a polyol compound and a polyisocyanate compound, with a chain extender and/or a curing agent, characterized by using, as all or part of the above polyol, the above polyether polyol (A).

In the present invention, it is possible to produce an isocyanate-terminated prepolymer by reacting the polyether polyol (A) and a polyisocyanate compound under the condition of an excess amount of isocyanate. Such a reaction may be carried out in an organic solvent.

The polyether polyol (A) in the present invention may be used alone or used together with another diol. Such another diol may, for example, be a polyether polyol such as a polyoxyethylene diol, polyoxypropylene diol or polyoxyethylene propylene diol produced by using a compound other than PTMG or polycarbonate diol as an initiator, polyoxytetramethylene diol (PTMG), polyester diol made of a low molecular weight diol and a low molecular weight dicarboxylic acid, a polycaprolactone diol obtainable by ring-opening polymerization of caprolactone or polycarbonate diol, and such another diol preferably has a molecular weight of from 500 to 4,000. Its ratio is preferably at most 50 parts by mass, more preferably at most 20 parts by mass based on 100 parts by mass of (A), and it is preferred that such another diol is not substantially used.

(Polyisocyanate compound)

The polyisocyanate compound to be used in the present invention is not particularly limited, but may, for example, be an aromatic polyisocyanate compound such as diphenylmethane diisocyanate, naphthalene-1,5-diisocyanate, polyphenylene polymethylene polyisocyanate, 2,4-tolylene diisocyanate or 2,6-tolylene diisocyanate; an aralkyl polyisocyanate compound such as tetramethylene xylylene diisocyanate or xylylene diisocyanate; an aliphatic polyisocyanate compound such as hexamethylene diisocyanate; an alicyclic polyisocyanate compound such as isophorone diisocyanate or 4,4'-methyl bis(cyclohexyl isocyanate); or a urethane-, biuret-, allophanate-, carbodiimide- or isocyanurate-modified product obtainable from the above polyisocyanate compound. Since the reactivity with the polyol compound is excellent and the viscosity of the isocyanate-terminated prepolymer obtainable is usually low, the polyisocyanate compound to be used in the present invention is preferably an aromatic diisocyanate, and especially diphenylmethane diisocyanate is preferred. Further, in an application where yellowing with time is unfavorable, the aliphatic polyisocyanate compound or the alicyclic polyisocyanate compound is preferred, and hexamethylene diisocyanate or isophorone diisocyanate is particularly preferred. The above polyisocyanate compound may be used alone or two or more of them may be used in combination.

(Chain extender and curing agent)

In the production of a polyurethane resin of the present invention, a chain extender and/or a curing agent may be used. In the field of polyurethane techniques, the chain extender and curing agent are known starting materials, and a compound having a molecular weight of less than 500 is preferred. Usually, the chain extender is meant for a compound of a relatively low molecular weight, having, per molecule, two functional groups which can undergo an addition reaction with isocyanate groups. The curing agent is meant for a compound of a relatively low molecular weight, having, per molecule, at least three functional groups which can undergo an addition reaction with isocyanate groups.

Chemical structures of the chain extender and/or curing agent to be used in the present invention are not particularly limited, and specifically, the following may be mentioned. The chain extender may, for example, be a diol compound such as ethylene glycol, diethylene glycol, triethylene glycol, propylene glycol, dipropylene glycol, tripropylene glycol, 1,4-butanediol, 1,6-hexanediol, neopentyl glycol, 1,4-cyclohexanedimethanol or 1,4-dihydroxycyclohexane. In the present invention, among them, ethylene glycol, propylene glycol, 1,4-butanediol and 1,6-hexanediol are preferred, and 1,4-butanediol is particularly preferred. As the chain extender, an amine chain extender may be used other than such diol compounds. Particularly, a preferred amine chain extender may be an aliphatic amine such as ethylenediamine or propylenediamine, an aliphatic amine such as isophoronediamine, or an aromatic amine such as toluenediamine, 4,4'-methylenebis(2-chloroaniline), 4,4'-methylenebis(3-chloro-2,6-diethylaniline), diethyltoluenediamine or methylenedianiline.

Whereas, the curing agent may, for example, be a polyfunctional polyol or polyamine such as glycerin, trimethylolpropane, diethanolamine or triethanolamine.

In the present invention, by employing only a chain extender, it is possible to produce a thermoplastic polyurethane elastomer. When the thermoplastic polyurethane elastomer is to be produced, it is preferred that only a chain extender is used and no curing agent is used, but a small amount of a curing agent may be used in combination so long as the thermoplasticity can be maintained. Further, by employing a curing agent, or a curing agent and a chain extender in combination, it is possible to produce a thermosetting polyurethane elastomer. In a case where the present invention is applied to the production of the thermoplastic polyurethane elastomer, it is possible to obtain one having an excellent elongation property and excellent mechanical strength, and in a case where the present invention is applied to the production of the thermosetting polyurethane elastomer, it is possible to obtain one having an excellent curing property and excellent mechanical strength. The present invention is preferably applied to the technique for producing the thermoplastic polyurethane elastomer. Particularly, it is preferably applied to an application where the elongation property is important.

(Method for producing isocyanate-terminated prepolymer)

It is preferred that the isocyanate-terminated prepolymer to be used for producing the polyurethane resin of the present invention is produced by reacting the above polyol compound and polyisocyanate compound in a ratio of the isocyanate group/the hydroxyl group (molar ratio) of from 1.5 to 10, preferably from 1.5 to 6.

The isocyanate-terminated prepolymer can be produced by a known method. For example, it can be produced by reacting the above polyol compound and polyisocyanate compound in a dry nitrogen stream under heating at 60 to 100°C for 1 to 20 hours. Such a reaction may be carried out in an organic solvent.

Then, the isocyanate-terminated prepolymer obtained as described above is reacted with the chain extender and/or curing agent to produce a polyurethane resin. With regard to the reaction of the above prepolymer with the chain extender and/or curing agent, the above prepolymer is reacted with desired chain extender and/or curing agent while the isocyanate index ((number of isocyanate groups)/(total number of amino groups and hydroxyl groups in chain extender and curing agent) $\times$ 100) is adjusted to be from 70 to 120, more preferably from 85 to 105, particularly preferably from 95 to 105.

The temperature for the reaction of the isocyanate-terminated prepolymer with the chain extender and/or curing agent, is preferably from 50 to 150°C. When the reaction temperature is at least 50°C, it is possible to prevent the reaction rate to be too slow, and when the reaction temperature is at least 150°C, it is possible to prevent a defect such that the starting material is cured without being mixed sufficiently and uniformly. Further, the reaction of the isocyanate-terminated prepolymer with the chain extender and/or curing agent can be carried out in an organic solvent. As mentioned below, the isocyanate-terminated prepolymer is produced in a solvent to obtain an isocyanate-terminated prepolymer solution, and the chain extender and/or curing agent is added to such a solution, whereby it is also possible to obtain a solution containing the polyurethane resin.

(Urethane reaction catalyst)

A known urethane reaction catalyst may be used for the reaction of the polyol compound and the polyisocyanate compound, and the reaction of the isocyanate-terminated prepolymer with the chain extender and/or curing agent, as mentioned above. The urethane reaction catalysts may, for example, be organic tin compounds such as dibutyltin dilaurate, dioctyltin dilaurate, dibutyltin octoate and tin 2-ethylhexanoate; iron compounds such as iron acetylacetonate and ferric chloride; and tertiary amine type catalysts such as triethylamine and triethylene diamine, and among them, the organic tin compounds are preferred.

When the above urethane reaction catalyst is to be used, it is used in an amount of preferably from 0.0001 to 1.0 part by mass, particularly preferably from 0.001 to 0.01 part by mass, based on 100 parts by mass of the total amount of the isocyanate-terminated prepolymer, and the chain extender and/or curing agent. For example, in a case where the isocyanate-terminated prepolymer, and the chain extender and/or curing agent are reacted and cured in a mold to obtain a molded product, the urethane reaction catalyst is used in an amount of at least 0.0001 part by mass based on the reaction mixture, whereby the time until the molded product becomes ready to be released, can be shortened to an allowable time. Further, when such an amount is at most 1.0 part by mass, it is possible to secure a preferred pot life by suitably prolonging the curing reaction of the reaction mixture.

(Other additives)

The polyurethane resin of the present invention may contain one or more additives selected from the group consisting of the following filler, reinforcing material, stabilizer, flame retardant, releasing agent and antifungus agent. The filler or reinforcing material may, for example, be carbon black, aluminum hydroxide, calcium carbonate, titanium oxide, silica, glass, crushed bone, wood flour or fiber flakes. The stabilizer may, for example, be an antiaging agent (an antioxidant, a ultraviolet absorber), a pigment or a light stabilizer. The flame retardant may, for example, be a chloroalkyl phosphate, dimethylmethyl phosphonate, ammonium polyphosphate or an organic bromine compound. The releasing agent may, for example, be wax, a soap or silicone oil. The antifungus agent may, for example, be pentachlorophenol, pentachlorophenol laurate or bis(tri-n-butyltin)oxide. The antiaging agent such as an antioxidant or an ultraviolet absorber may, for example, be a hindered phenol type compound such as butylhydroxytoluene (BHT), benzotriazole type or hindered amine type compound, butylhydroxyanisole (BHA), diphenylamine, phenylenediamine or triphenyl phosphite. The pigment can be an inorganic pigment or an organic pigment. The inorganic pigment to be used may be titanium dioxide, zinc oxide, ultramarine blue, bengala, lithopone, lead, cadmium, iron, cobalt, aluminum, hydrochloride, sulfate, or the like. The organic pigment may be an azo pigment, a copper phthalocyanine pigment, or the like. The polyurethane resin in the present invention may be produced by pouring a starting material into a mold or applying it on the substrate for curing, or such a starting material is reacted in the organic solvent to prepare a polyurethane resin solution, and then the organic solvent is removed by the after-mentioned method to prepare a polyurethane resin having a variety of shapes. Further, in a case where the thermoplastic polyurethane resin is produced by using only a bifunctional starting material, it is possible to prepare a polyurethane resin having a variety of shapes by heat-molding by a known method.

A particularly preferred embodiment of the present invention is a method for producing a polyurethane resin, which comprises reacting an isocyanate-terminated prepolymer obtained by reacting a polyol compound and a polyisocyanate compound, with a chain extender and/or curing agent, characterized by using, as all or part of the above polyol compound, the above polyether polyol (A).

Further, it is preferably a method for producing a polyurethane resin solution, which comprises reacting an isocyanate-terminated prepolymer with a chain extender and/or a curing agent in an organic solvent, wherein said prepolymer is obtained by reacting a polyisocyanate compound and the above polyether polyol (A).

Further, in the present invention, it is preferred that only a chain extender is used in the above method for producing a polyurethane resin solution.

Now, the above method for producing a polyurethane resin solution, using only a chain extender, will be described in detail.

It is possible to produce the polyurethane resin solution in the present invention by the following method. Namely, the above polyether polyol (A) and an organic polyisocyanate compound are reacted by the above method to obtain an isocyanate-terminated polyurethane prepolymer. This reaction may be carried out in an organic solvent, and in such a case, the prepolymer solution is obtained, but in a case where no organic solvent is employed, the prepolymer obtained is dissolved in such an organic solvent to obtain a prepolymer solution. Then the above chain extender is added to such a prepolymer solution to carry out the polymerization reaction. The concentration of the polyurethane resin solution is preferably from 15 to 40 mass%.

The ratio of the above chain extender to be used in the present invention is preferably such that the ratio represented by (number of isocyanate groups)/(total number of hydroxyl groups and amino groups in the chain extender) $\times$ 100 in the prepolymer solution would be 80 to 105. If the ratio is within the above range, it is possible to obtain a resin with high strength. Further, at that time, as a molecular weight modifier, a terminal group terminator such as the above diethylamine or dibutylamine may be used.

The organic solvent may, for example, be dimethylformamide, dimethylacetamide, dimethylsulfoxide, methyl ethyl ketone, cyclohexanone, ethyl acetate, isopropyl alcohol, or a mixture thereof.

The polyurethane resin solution of the present invention may optionally contain the above additive such as a pigment, a dye, an antioxidant, an antiaging agent or an anti-yellowing agent.

The above-mentioned urethane resin solution of the present invention is molded into a predetermined shape and then the organic solvent is removed to prepare a polyurethane resin.

Further, the above-mentioned urethane resin solution of the present invention is applied on or impregnated in a substrate, and then the organic solvent is removed to prepare a polyurethane resin.

The polyurethane resin solution can be also used as a printing ink binder. In such a case, into the above-mentioned polyurethane resin solution, a colorant, other additives and an additional organic solvent are blended so as to be mixed and dispersed, thereby producing a printing ink composition.

The polyurethane resin solution of the present invention can be molded into a film form by uniformly applying the solution onto a base material, drying it, and removing a film from the base material. Furthermore, e.g. an antioxidant, an anti-yellowing agent or a colorant is added to the resin solution if necessary, and then the urethane resin solution is conditioned through defoaming and filtering. The conditioned solution is extruded from a nozzle into a spinning cylinder and a heated gas is introduced into the spinning cylinder to evaporate the organic solvent, thereby reeling off elastic fiber to produce an elastic fiber. Furthermore, a surface of a fiber material or unwoven fabric is coated or impregnated with the polyurethane resin solution of the present invention and is made to pass through a water tank by the wet solidification method or through a heating oven by the dry solidification method to obtain a synthetic leather.

Further, a polyurethane resin can be produced from the polyurethane resin solution of the present invention by strongly stirring a reaction mixture containing optionally selected materials, e.g., additives such as a filler, a reinforcing material, a stabilizer, a flame retardant and a mold-releasing agent, a foaming agent, and a pigment, and then pouring the mixture into a die of a desired shape, extruding it, or adhering it onto a moving belt, followed by curing. A variety of products can be produced by using, as a starting material, the above polyurethane resin after pulverized or pelletized, by methods of injection molding, blow molding, or the like with an extruder or with other apparatus.

Further, in a case of using as a printing ink binder, the printing ink composition obtained is applied to a substrate to be printed, by a gravure coat method, a roll coat method, a die coat method, a curtain coat method, a spin coat method or the like, and if necessary, it is subjected to heating or drying under a reduced pressure to obtain a coating. The substrate to be printed may, for example, be plastic films of polyethylene terephthalate, nylon, polyolefins such as polyethylene and polypropylene, polystyrene, vinyl chloride, acrylic resin, cellophane, and so on, metal films such as aluminum foil, rubber, elastomer, and so on.

EXAMPLES

Now, the present invention will be described in further detail with reference to Examples and Comparative Examples, but it should be understood that the present invention is by no means restricted thereto.

Here, abbreviations in Tables are as follows.

PTMG: polyoxytetramethylene glycol,

PO: propylene oxide,

EO: ethylene oxide, and

THF: tetrahydrofuran.

Further, the molecular weight $M_{OH}$ of each polyol is a converted molecular weight calculated by the following formula with the number of hydroxyl groups in the polyol and a hydroxyl value measured in accordance with the method described in JIS K-1557. The number of hydroxyl groups in the polyether polyol was rated as the number of functional groups of the initiator used for the production thereof.

$$M_{OH} = (56{,}100 \times \text{number of hydroxyl groups in polyol})/\text{hydroxyl value}$$

Mw/Mn was obtained by means of GPC (Mw is meant for a weight average molecular weight, and Mn is meant for a number average molecular weight). The unsaturation degree was measured by a method described in JIS K-1557. The viscosity was measured in accordance with JIS K-1557 at 25°C.

PRODUCTION EXAMPLES 1 TO 7 (Synthesis of polyether diol) Synthesis of polyether diols (P-1 to P-5) used in Examples of the present invention and polyether diol (R-5) used in Comparative Example

Into a reaction vessel, 1,000 g of polyoxytetramethylene diol (PTG-1000 manufactured by Hodogaya Chemical Co., Ltd., $M_{OH}=1{,}000$) as an initiator and 100 mg of a zinc hexacyanocobaltate-ETB/TBA complex catalyst as a solid catalyst component were introduced. After replacing the interior of the reaction vessel with nitrogen, the temperature was raised to 120°C, and 1,000 g of propylene oxide was quantitatively supplied over about five hours. After completion of the supply, the mixture was further reacted at 120°C for one hour, to obtain a polyether diol P-1. $M_{OH}$ of the polyether diol P-1 obtained was 2,000.

Further, polyether diols P-2 to P-5 and R-2 were obtained in the same manner as Production Example 1 except that the initiator shown in Table 1 was used. Further, polyether diol R-5 was similarly obtained except that an aqueous potassium hydroxide solution was used instead of a composite metal cyanide complex. The composition and properties of the diol obtained are shown in Table 2.

For comparison, the compositions and properties of R-1, R-3 and R-4 used are shown in Table 3.

TABLE 1

| Name | Details | Molecular weight $M_{OH}$ | Mw/Mn | Unsaturation degree | Viscosity mPa·s/ 25˚C |
|---|---|---|---|---|---|
| PTG-1000 | PTMG manufactured by Hodogaya Chemical Co., Ltd. | 1,000 | 1.92 | - | Solid |
| PTG-650SN | PTMG manufactured by Hodogaya Chemical Co., Ltd. | 650 | 1.70 | - | Solid |
| PTG-2000 | PTMG manufactured by Ltd. Hodogaya Chemical Co., Ltd. | 2,000 | 2.01 | - | Solid |
| PTMG-1800 | PTMG manufactured by Mitsubishi Chemical Corporation | 1,800 | 2.01 | - | Solid |
| PTMG-1500 | PTMG manufactured by Mitsubishi Chemical Corporation | 1,500 | 1.95 | - | Solid |
| PTMG-2000 | PTMG manufactured by Mitsubishi Chemical Corporation | 2,000 | 2.10 | - | Solid |
| U-1 | Polyoxypropylene diol which is obtained by ring-opening polymerization of PO with a propylene glycol, using KOH | 700 | 1.05 | 0.007 | 100 |
| U-2 | Copolymer of THF and EO manufactured by Hodogaya Chemical Co., Ltd. (Tradename: PPTG-2000) | 2,000 | 2.05 | - | 840 |

TABLE 2

| Production Example | 1 | 2 | 3 | 4 | 5 | 6 | 7 |
|---|---|---|---|---|---|---|---|
| Name of polyol | P-1 | P-2 | P-3 | P-4 | P-5 | R-2 | R-5 |

(continued)

| Production Example | 1 | 2 | 3 | 4 | 5 | 6 | 7 |
|---|---|---|---|---|---|---|---|
| Initiator | PTG-1000 | PTG-1000 | PTMG-1500 | PTG-650 | PTG-2000 | U-1 | PTG-1000 |
| Molecular weight of initiator ($M_{OH}$) | 1,000 | 1,000 | 1,500 | 650 | 2,000 | 700 | 1,000 |
| Molecular weight distribution of initiator (Mw/Mn) | 1.92 | 1.92 | 1.95 | 1.70 | 2.01 | 1.05 | 1.98 |
| Kind of AO | PO | Mixture of PO and EO at 25/75 (mass ratio) | Mixture of PO and EO at 25/75 (mass ratio) | PO | PO | PO | PO |
| Molecular weight ($M_{OH}$) of diol obtained | 2,000 | 2,000 | 2,000 | 2,000 | 3,000 | 2,000 | 2,000 |
| Molecular weight distribution (Mw/Mn) of diol obtained | 1.05 | 1.08 | 1.05 | 1.04 | 1.21 | 1.07 | 1.84 |
| Unsaturation degree (meq/g) of diol obtained | 0.003 | 0.001 | 0.001 | 0.003 | 0.003 | 0.005 | 0.025 |
| Viscosity (mPa·s/ 25˚C) | 740 | 890 | 2,800 | 620 | 3,100 | 350 | 670 |

TABLE 3

| Name of diol | R-1 | R-3 | R-4 | |
|---|---|---|---|---|
| Kind of diol | PTG-2000 | U-2 | Mixture of PTG-2000 and R-2 at 50/50 (mass ratio) | |
| Molecular weight distribution (Mw/Mn) of diol obtained | 2.01 | 2.05 | - | |
| Unsaturation degree (meq/g) of diol obtained | - | - | 0.003 | |
| Viscosity (mPa·s/25C) | Solid | 840 | 3,200 | |

EXAMPLES 1 TO 5 AND COMPARATIVE EXAMPLES 1 TO 5

(Syntheses of polyurethane resin solutions)

A predetermined polyether diol and diphenyl methane diisocyanate (MDI) were introduced at a ratio of isocyanate group/hydroxyl group (molar ratio) of 1.75 into a reaction vessel equipped with a stirrer and a nitrogen-introducing tube, and reacted at 80˚C under a nitrogen atmosphere for about 4 hours to obtain an isocyanate group-terminated polyurethane prepolymer. Tables 4 to 6 show the isocyanate group content (NCO content in the table) in the prepolymer. The prepolymer was dissolved in dimethylacetamide to obtain a prepolymer solution. Thereafter, a mixture of ethylenediamine and diethylamine (a mixture at such a ratio that the ratio of their amino groups was 95/5 (molar ratio)) was added to this prepolymer solution so that the isocyanate group contained in the prepolymer/the total number of the amino groups (molar ratio) was 1.01,followed by a polymerization reaction. Then, dimethylacetamide was added to obtain a polyurethane resin solution having a concentration of about 30 mass%. Tables 4 to 5 show kinds of the diols used, charged ratios and properties of the polyurethane resin solutions obtained.

(Production of polyurethane films)

Each polyurethane resin solution obtained was applied onto a biaxially stretched polypropylene film with an applicator of 500 $\mu$m. The film coated was maintained at 80˚C in a drier for 30 minutes, and further maintained at 80˚C in a vacuum drier for 60 minutes to completely remove the solvent of dimethylacetamide, thereby obtaining a polyurethane resin film.
Each urethane resin film obtained was cured at 20˚C under a relative humidity of 60% for one day, and then cut with a dumbbell cutter to prepare each test piece of a predetermined shape.

(Evaluation of polyurethane resin films)

Each polyurethane resin film obtained was tested as to each of test items below.

(1) Initial Properties

(Tensile test)

Each film was subjected to a tensile test under the conditions below to measure the 100% modulus (M100), 300% modulus (M300), strength at break and elongation at break.

Property measuring conditions

Measuring apparatus: tensile tester (Tensilon VTM (tradename) manufactured by Toyo-Baldwin Company),
Test piece: dumbbell test piece-3,
Tensile rate: 300 mm/min,
Measuring temperature: 23˚C,
Relative humidity: 65%.

(Elastic recovery rate)

A test piece in a gauge length of 20 mm (L1) was subjected to five times of 300% elongation at a tensile rate of 500 mm/min, and then a length (L2) of the test piece at the stress of 0 was measured. The elastic recovery rate was calculated in accordance with the following equation.

$$\texttt{Elastic recovery rate: } 100-(L2-L1)/L1 \times 100$$

(2) Heat Resistance Test

A film obtained was maintained at 180˚C for 5 minutes, and then at room temperature for at least 12 hours, and thereafter the film was subjected to the tensile test in the same manner as above. Furthermore, a strength retention rate was calculated according to (strength at break after heat resistance test/strength at break before heat resistance test) $\times$ 100.

(3) Properties Under Low Temperatures

(Elastic modulus under low temperatures)

The elastic modulus under low temperatures was measured by the following apparatus.

Apparatus: dynamic viscoelasticity measuring apparatus (manufactured by SII NanoTechnology Inc.)

Size of test piece: 10 mm × 30 mm (thickness: about 150 μm)

Test temperatures: -100˚C to 100˚C

A value of storage elastic modulus (E') at -15˚C was read from a graph.

(Elastic recovery Rate under Low Temperatures)

The elastic recovery rate was measured at -15˚C in the same manner as above.

TABLE 4

| Example | Ex.1 | Ex.2 | Ex.3 | Ex.4 | Ex.5 |
|---|---|---|---|---|---|
| Diol | P-1 | P-2 | P-3 | P-4 | P-5 |
| NCO content (%) | 2.28 | 2.53 | 2.40 | 2.38 | 1.77 |
| Viscosity of polyurethane resin solution (Pa·s/25˚C) | 62 | 179 | 369 | 55 | 100 |
| Initial properties | | | | | |
| M100 (MPa) | 3.8 | 3.8 | 4.5 | 3.4 | 2.1 |
| M300 (MPa) | 6.0 | 6.2 | 7.7 | 5.5 | 4.1 |
| Strength at break (MPa) | 27 | 29 | 37 | 23 | 20 |
| Elongation at break (%) | 1,020 | 860 | 750 | 1,010 | 1,100 |
| Elastic recovery rate (%) | 61 | 58 | 70 | 60 | 60 |
| Heat resistance (secondary properties) | | | | | |
| M100 (MPa) | 3.6 | 3.5 | 5.0 | 3.2 | 1.9 |
| Strength at break (MPa) | 16 | 9.9 | 19 | 9.2 | 8.0 |
| Strength retention rate (%) | 57 | 35 | 52 | 40 | 40 |
| Elongation at break (%) | 680 | 433 | 488 | 620 | 580 |
| Properties under low temperatures (-15˚C) | | | | | |
| Elastic recovery under low temperatures (%) | 90 | 80 | 50 | 70 | 70 |
| Elastic modulus under low temperatures (MPa) | 10 | 20 | 30 | 10 | 12 |

TABLE 5

| Comparative Example | Comp. Ex. 1 | Comp. Ex. 2 | Comp. Ex. 3 | Comp. Ex. 4 | Comp. Ex. 5 |
|---|---|---|---|---|---|
| Diol | R-1 | R-2 | R-3 | R-4 | R-5 |
| NCO content (%) | 2.55 | 2.50 | 2.45 | 2.52 | 2.45 |
| Viscosity of polyurethane resin solution (Pa·s/25˚C) | 850 | 67 | 800 | 200 | 450 |
| Initial properties | | | | | |
| M100 (MPa) | 4.6 | 3.9 | 4.6 | 4.0 | 2.8 |
| M300 (MPa) | 10 | 5.1 | 6.4 | 6.8 | 4.5 |
| Strength at break (MPa) | 46 | 13 | 18 | 32 | 20 |

(continued)

| Comparative Example | Comp. Ex. 1 | Comp. Ex. 2 | Comp. Ex. 3 | Comp. Ex. 4 | Comp. Ex. 5 |
|---|---|---|---|---|---|
| Elongation at break (%) | 630 | 1,040 | 1,050 | 880 | 680 |
| Elastic recovery rate (%) | 80 | 50 | 65 | 61 | 50 |
| Heat resistance (secondary properties) | | | | | |
| M100 (MPa) | 5.1 | 2.1 | 3.7 | 3.6 | 2.0 |
| Strength at break (MPa) | 32 | 2.5 | 14 | 9 | 7 |
| Strength retention rate (%) | 70 | 20 | 76 | 29 | 35 |
| Elongation at break (%) | 510 | 170 | 1,000 | 440 | 410 |
| Properties under low temperatures (-15˚C) | | | | | |
| Elastic recovery under low temperatures (%) | 0 | 90 | 75 | 20 | 60 |
| Elastic modulus under low temperatures (MPa) | 70 | 7 | 20 | 45 | 7 |
| Evaluations | Poor in properties under low temperatures | Poor in strength, poor in heat resistance | Poor in strength | Poor in properties under low temperatures, poor in strength | Poor in strength |

The polyurethane resins of Examples 1 to 4 of the present invention have the high low-temperature elastic recovery rates at -15˚C in a range of from 50 to 90%, the low low-temperature elastic modulus of at most 30 MPa, and the room-temperature elongation at break of at least 750%. Furthermore, they also secure the strength retention rates of at least 35% in the test after retained at 180˚C for 5 minutes, and the heat resistance is not deteriorated so much. On the other hand, the polyurethane resins in Comparative Examples 1 and 4 have the low low-temperature elastic recovery rates, and those in Comparative Examples 2, 3 and 5 have the good low-temperature elastic properties but the poor heat resistances and tensile strengths.

It is clear from the above results that the polyurethane resins of the present invention show a high elongation at break in the form of elastic fiber or the like, and are suitable for applications requiring excellent elastic recovery rates under low temperatures. PRODUCTION EXAMPLE 8 (Preparation of diol (P-6) obtainable by block-addition polymerization of propylene oxide with polycarbonate diol)

Into a pressure resistant reactor equipped with a stirrer and a nitrogen introduction tube, 1,905 g of polycarbonate diol having a hydroxyl value of 112 mgKOH/g ($M_{OH}$=1,000) was put as an initiator. To the initiator, 200 mg of zinc hexacyanocobaltate-TBA complex was added as a catalyst, and further 2,000 g of propylene oxide was slowly added to carry out the reaction for 7 hours at 130˚C in a nitrogen atmosphere. After termination of the decrease of the internal pressure of the reactor, an unreacted starting material was deaerated and recovered under reduced pressure, but no propylene oxide was recovered, and therefore, the starting materials were confirmed to be reacted. Then, the product was taken out from the reaction vessel to obtain a diol P-6 (hydroxyl value: 58.1 mgKOH/g) having propylene oxide polymerized to terminals of polyoxypropylene diol. Mw/Mn was 1.44, and the unsaturation degree was 0.0099.

EXAMPLE 6 (Production of polyurethane resin)

The polyurethane resin was produced as follows. In the reaction vessel, 750 g of polyol compound (P-6) and 210 g of P-MDI (diphenylmethane diisocyanate) were mixed, and reacted for 4 hours under heating at 80˚C to obtain an isocyanate-terminated prepolymer.

Then, to the isocyanate-terminated prepolymer obtained, 40 g of 1,4-butanediol was added as a chain extender, and the mixture was put into a stainless steel pallet and further reacted for 6 hours at 130˚C to obtain a polyurethane resin having a hard content of 25%. Here, the hard content is a value (%) calculated by the formula of (mass of p-MDI + mass of 1,4-butanediol)/(mass of p-MDI + mass of 1,4-butanediol + mass of polyol compound) $\times$ 100 (%).

The above polyurethane resin obtained was pulverized into flakes by using a grinder. Then, by using an extruder, the above flake-form polyurethane resin was melted at a die temperature of from 180 to 210˚C and pelletized by a pelletizer. By using an extruder, the above palletized resin composition was molded into a film-form having a thickness of 100 $\mu$m at a die temperature of 180 to 210˚C.

(Evaluation of polyurethane resin)

By using the above film-form polyurethane resin, the moldability, heat resistance, hot water resistance, shore A hardness and mechanical properties were measured. Measuring methods and evaluation standards are respectively as follows.

(1) Moldability: A case wherein polyurethane resin pellets have substantially no tackiness and can readily be introduced into the extruder, was rated as ○; and a case wherein polyurethane resin pellets have slight tackiness and some pellets brought about blocking, and thus they can hardly be introduced into the extruder, was rated as △.
(2) Mechanical properties: In accordance with JIS K7311, 100% modulus (M100, MPa·s), 300% modulus (M300, MPa·s), tensile strength (Ts, MPa·s) and elongation at break (%) were measured.
(3) Heat resistance: In the presence of air, the polyurethane resin film was left to stand for one week in an oven at a temperature of 120˚C, whereupon the tensile strength (Ts) was measured. The retention ratio of the tensile strength (Ts) after such a resin film was left to stand for one week at a temperature of 120˚C in the presence of air, to the tensile strength (Ts) of the polyurethane resin film before carrying out such a heating test, was rated as ○ when the retention ratio was at least 70%; △ when the retention ratio was at least 60% and less than 70%; and $\times$ when the retention ratio was less than 50% or when it was impossible to measure the mechanical properties since such a film was remarkably deteriorated by heat.
(4) Hot water resistance: The tensile strength (Ts) was measured after the polyurethane resin film was immersed for one week in hot water at 80˚C. The retention ratio of the tensile strength (Ts) after the polyurethane resin was immersed for one week in a hot water at 80˚C, to the tensile strength (Ts) of the polyurethane resin film before carrying out such a hydrolysis, was rated as ○ when such a retention ratio was at least 70%; and △ when such a retention ratio was less than 70%.
(5) Shore A hardness: Shown was a shore A hardness of a polyurethane resin measured in accordance with JIS K6301.

Results obtained by the above measurements were shown in Table 6.

TABLE 6

| Example | Ex. 6 |
|---|---|
| Diol | P-6 |
| Moldability | △ |
| Heat resistance | O |
| Hot water resistance | O |
| Shore A hardness | 62 |
| Mechanical properties M100 (MPa) | 1.8 |

(continued)

| Mechanical properties | |
|---|---|
| M300 (MPa) | 3.8 |
| Strength at break (MPa) | 29 |
| Elongation at break (%) | 700 |
| Tear strength (kN/m) | 32 |

EXAMPLE 7 AND COMPARATIVE EXAMPLE 6

(Production Example of polyurethane resin for printing ink)

A polyurethane resin was produced as follows. 400 g of polyether diol (P-1), 66.7 g of isophorone diisocyanate (at a ratio of isocyanate group/hydroxyl group (molar ratio) of 1.5) and 0.05 g of dibutyltin dilaurate as a catalyst were mixed in a reaction vessel equipped with a stirrer and a nitrogen-introducing tube and heated at 80˚C for reaction for 4 hours, thereby preparing an isocyanate group-terminated prepolymer (in which the isocyanate group content was 1.8 mass%).

The prepolymer obtained was dissolved in 700 g of methyl ethyl ketone. Then, a chain extender solution was prepared so that 17 g of isophorone diamine and 0.7 g of dibutylamine were dissolved in 300 g of isopropyl alcohol and 148 g of methyl ethyl ketone (the ratio of amino groups of isophorone diamine and dibutylamine (molar ratio) was 95/5). Such a chain extender solution was added to the prepolymer solution and reacted at 80˚C to obtain a polyurethane urea solution with a resin content of 30 mass% (the ratio of the isocyanate group/total number of amino groups (molar ratio) was 1/1.05) (Example 7).

For comparison, a polyurethane urea solution for comparison was prepared exactly in the same manner except that PTMG-2000 was used instead of the polyether diol (P-1) .

(Preparation of white ink composition)

A printing ink was prepared using each resulting polyurethane urea solution as a binder, as follows.

| | |
|---|---|
| Polyurethane resin solution | 100 parts by mass |
| Pigment (rutile type titanium oxide) | 90 parts by mass |
| Isopropyl alcohol | 30 parts by mass |
| Methyl ethyl ketone | 40 parts by mass |
| Zircon beads (dispersion medium) | 150 parts by mass |

The above starting materials were introduced into a steel can having an inner volume of 500 cm$^3$ and kneaded for one hour by a paint conditioner to obtain a white ink composition for printing. The resulting white ink composition was subjected to performance tests below.

(Re-dissolution)

The white ink composition was applied onto a glass plate with a bar coater so that the solid content became to have a thickness of 2 to 3 $\mu$m. The resultant was left at room temperature for 10 seconds to semi-dry the ink surface. Then, the glass plate was immersed in a solvent (a solvent mixture of methyl ethyl ketone/ethyl acetate/isopropyl alcohol) to observe the re-dissolution of the ink film. Evaluation standards were such that ○ indicates a case where the coating film was re-dissolved, and × indicates a case where the coating film was not re-dissolved but remained on the glass plate.

(Peeling Test of Sellotape (registered trademark))

The white ink composition was applied onto each of surface-treated polypropylene (OPP), surface-treated polyester film (PET) and surface-treated nylon with a bar coater so that the solid content became to have a thickness of 2 to 3 $\mu$m. After drying at 60˚C for one minute, a Sellotape (registered trademark) (manufactured by NICHIBAN CO., LTD. and having the width of 12 mm) was put on the coating surface and one end of the Sellotape (registered trademark) was peeled rapidly in a direction perpendicular to the coating surface. Thereafter, a state of the coating surface was observed. Evaluation standards were such that ○ indicates a case where the ink remained at least 80%, △ indicates a case where the ink remained from 50 to 80%, and × indicates a case where the ink remained 50% or less.

The results are shown in Table 7.

TABLE 7

| Example | Example 7 | Comparative Example 6 |
|---|---|---|
| Viscosity of polyurethane urea resin solution (mPa·s/25˚C) | 800 | 1,200 |
| Re-dissolution | O | × |
| Peeling test of Sellotape OPP PET Nylon | O O O | × △ △ |

It is clear from Table that the printing ink composition of the polyurethane urea resin type made from the polyether polyol of the present invention is excellent in the re-dissolution and adhesiveness, as compared with the composition made from the general-purpose PTMG.

INDUSTRIAL APPLICABILITY

The polyurethane resin obtainable by the present invention, has a large elongation at break, a low elastic modulus in tension, and a low elastic modulus and an excellent elastic recovery even under low temperatures, and thus, it can be used for wide fields such as an elastic fiber, a synthesis leather, a flooring material, a printing ink binder, and so on.

The entire disclosures of Japanese Patent Application No. 2004-306840 filed on October 21, 2004 and Japanese Patent Application No. 2005-211499 filed on July 21, 2005 including specifications, claims, drawings and summaries are incorporated herein by reference in their entireties.

**Claims**

1. A method for producing a polyurethane resin, which comprises reacting a polyol compound and a polyisocyanate compound, **characterized by** using, as all or part of the above polyol compound, a polyether polyol (A) having a molecular weight of from 750 to 4,000, which is obtained by a ring-opening addition polymerization of an alkylene oxide with a polyoxytetramethylene polyol or a polycarbonate polyol having a molecular weight of from 500 to 2,500 as an initiator, using a composite metal cyanide complex catalyst.

2. A method for producing a polyurethane resin, which comprises reacting a polyol compound, a polyisocyanate compound, and a chain extender and/or a curing agent, **characterized by** using, as all or part of the above polyol compound, a polyether polyol (A) having a molecular weight of from 750 to 4,000, which is obtained by a ring-opening addition polymerization of an alkylene oxide with a polyoxytetramethylene polyol or a polycarbonate polyol having a molecular weight of from 500 to 2,500 as an initiator, using a composite metal cyanide complex catalyst.

3. A method for producing a polyurethane resin, which comprises reacting an isocyanate-terminated prepolymer obtained by reacting a polyol compound and a polyisocyanate compound, with a chain extender and/or a curing agent, **characterized by** using, as all or part of the above polyol compound, a polyether polyol (A) having a molecular weight of from 750 to 4,000, which is obtained by a ring-opening addition polymerization of an alkylene oxide with a polyoxytetramethylene polyol or a polycarbonate polyol having a molecular weight of from 500 to 2,500 as an initiator, using a composite metal cyanide complex catalyst.

4. A method for producing a polyurethane resin solution, which comprises reacting an isocyanate-terminated prepolymer with a chain extender and/or a curing agent in an organic solvent, wherein said prepolymer is obtained by reacting a polyisocyanate compound and a polyether polyol (A) having a molecular weight of from 750 to 4,000, which is obtained by a ring-opening addition polymerization of an alkylene oxide with a polyoxytetramethylene polyol or a polycarbonate polyol having a molecular weight of from 500 to 2,500 as an initiator, using a composite metal cyanide complex catalyst.

5. A polyurethane resin solution in which a polyurethane resin is dissolved in an organic solvent, wherein the polyurethane resin is obtained by reacting an isocyanate-terminated prepolymer with a chain extender and/or a curing agent in an organic solvent wherein said prepolymer is obtained by reacting a polyisocyanate compound and a polyether polyol (A) having a molecular weight of from 750 to 4,000, which is obtained by a ring-opening addition polymerization of an alkylene oxide with a polyoxytetramethylene polyol or a polycarbonate polyol having a molecular weight of from 500 to 2,500 as an initiator, using a composite metal cyanide complex catalyst.

6. The polyurethane resin solution according to Claim 5, which is used for an elastic film, an elastic fiber or a synthetic leather.

7. A method for producing a polyurethane resin, which comprises molding the polyurethane resin solution as defined in Claim 5, into a predetermined shape, and thereafter removing the organic solvent.

8. A method for producing a polyurethane resin, which comprises coating or impregnating a substrate with the polyurethane resin solution as defined in Claim 5, and thereafter removing the organic solvent.

**INTERNATIONAL SEARCH REPORT**

International application No.

PCT/JP2005/019146

A.  CLASSIFICATION OF SUBJECT MATTER
*C08G18/48*(2006.01), *C08G18/66*(2006.01)

According to International Patent Classification (IPC) or to both national classification and IPC

B.  FIELDS SEARCHED

Minimum documentation searched (classification system followed by classification symbols)
C08G18/00-18/87

Documentation searched other than minimum documentation to the extent that such documents are included in the fields searched
Jitsuyo Shinan Koho        1922-1996   Jitsuyo Shinan Toroku Koho   1996-2006
Kokai Jitsuyo Shinan Koho  1971-2006   Toroku Jitsuyo Shinan Koho   1994-2006

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y | JP 60-135421 A (Asahi Glass Co., Ltd.), 18 July, 1985 (18.07.85), Claims 1, 2; page 4, lower right column, lines 4 to 17 (Family: none) | 1-8 |
| Y | JP 2000-72840 A (Asahi Glass Co., Ltd.), 07 March, 2000 (07.03.00), Claim 4; Par. Nos. [0005], [0013] to [0015] (Family: none) | 1-8 |
| Y | JP 2000-86740 A (Asahi Glass Co., Ltd.), 28 March, 2000 (28.03.00), Par. No. [0026] (Family: none) | 1-8 |

☐ Further documents are listed in the continuation of Box C.      ☐ See patent family annex.

\*   Special categories of cited documents:
"A"  document defining the general state of the art which is not considered   to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

Date of the actual completion of the international search
11 January, 2006 (11.01.06)

Date of mailing of the international search report
24 January, 2006 (24.01.06)

Name and mailing address of the ISA/
Japanese Patent Office

Authorized officer

Facsimile No.

Telephone No.

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 63235320 A
- JP 2019511 A
- JP 2002034827 A
- JP 2002034828 A
- JP 8511297 A
- JP 2004306840 A
- JP 2005211499 A